# EUROPEAN PATENT SPECIFICATION

(11) **EP 3 290 561 B1**
(45) Date of publication and mention of the grant of the patent: **30.09.2020**
(21) Application number: 17188820.9
(22) Date of filing: 31.08.2017
(51) Int. Cl.: D06F 33/43, D06F 35/00, D06F 103/26, D06F 105/48

(54) **METHOD OF CONTROLLING A WASHING MACHINE**
VERFAHREN ZUR STEUERUNG EINER WASCHMASCHINE
PROCÉDÉ DE COMMANDE D'UNE MACHINE À LAVER

(30) Priority: 01.09.2016 KR 20160112546
(43) Date of publication of application: 07.03.2018
(73) Proprietor: LG Electronics Inc., Seoul 07336 (KR)
(72) Inventor: BAE, Suncheol, 08592 Seoul (KR); SHIN, Youngbin, 08592 Seoul (KR)
(74) Representative: Vossius & Partner Patentanwälte Rechtsanwälte mbB

(56) References cited:
- EP-A1- 2 725 129
- EP-A2- 2 381 026
- WO-A1-2012/089628
- DE-A1-102009 046 454
- US-A1- 2011 061 172

## Description

The present invention relates to a method of controlling a washing machine, and more particularly to a method of controlling a washing machine that is capable of easily cleaning a tub.

In general, a washing machine is an apparatus that removes contaminants from laundry, such as clothes, through a process of washing the laundry.

Washing machines may be classified into a top loading type washing machine, configured such that the axis of rotation of a drum is perpendicular to the ground, and a front loading type washing machine, configured such that the axis of rotation of a drum is parallel to the ground.

In the top loading type washing machine, the axis of rotation of the drum is substantially perpendicular to the ground, the drum is provided in a tub for storing wash water, and washing is performed in a pulsator mode, in which laundry is washed in the state in which the laundry is immersed in wash water supplied into the drum.

In the pulsator mode, washing is performed by the friction between wash water and laundry and the action of detergent through the rotation of the drum or the rotation of a pulsator, which is provided in the lower part of the drum to generate a stream of water. In the pulsator mode, however, washing is performed only when the wash water is supplied such that the laundry is immersed in the wash water. As a result, a large amount of wash water is used.

In the front loading type washing machine, the axis of rotation of the drum is substantially parallel to the ground, and washing is performed in a drum washing mode, in which washing is performed by the friction between the drum, which is rotated by the driving force from a motor, and laundry and the dropping of the laundry in the state in which detergent, wash water, and the laundry are received in the drum.

In the drum washing mode, the laundry is little damaged, does not become tangled, and is washed in a striking and rubbing fashion.

In a drum washing machine, which performs washing in the drum washing mode, the axis of rotation of the drum is substantially parallel to the ground. As a result, a portion of the drum is immersed in wash water even when a small amount of wash water is stored in a tub and the drum. Consequently, washing is performed by the friction between the drum, which is rotated, and laundry and by the dropping of the laundry.

Since the tub is not driven, wash water may be distributed to the entirety of the inner circumferential surface of the tub when the drum is rotated at a high speed, in addition to the lower part of the tub. As a result, contaminants or scale may accumulate on the entirety of the inner circumferential surface of the tub. In particular, once contaminants or scale accumulates on the inside surface of a door or the upper part of the inner circumferential surface of the tub and is then dried, it is not easy to remove the contaminants or scale therefrom, since they are not immersed in wash water.

In order to solve this problem, in a conventional drum washing mode, a predetermined amount of wash water is supplied into the tub and the drum is accelerated to a specific rotational speed such that the wash water cleans the inner circumferential surface of the tub while circulating along the inner circumferential surface of the tub according to the rotation of the drum.

In the conventional drum washing mode, however, if the eccentric amount of the drum exceeds a reference eccentric amount at a step of accelerating the drum to a specific rotational speed, the drum is decelerated to a rotational speed of 0 revolutions per minute (revolutions per minute are hereinafter referred to as "RPM") or a very low rotational speed, and then a subsequent cycle is performed. That is, if the eccentric amount of the drum exceeds a reference eccentric amount at the acceleration step for cleaning the tub, the cleaning of the tub is omitted. As a result, the success rate of tub cleaning is reduced.

Also, in the conventional drum washing mode, the drum is rotated at a high speed during the supply of water after laundry is removed from the drum. Consequently, the supplied water is discharged without being used in a subsequent step, which leads to the waste of water.

Meanwhile, detergent may be used for tub cleaning. The detergent that is generally used for tub cleaning contains a large amount of chemical components that cause water pollution in order to have powerful washing force, unlike detergent for general washing. Consequently, the detergent used for tub cleaning is not environmentally friendly.

EP 2 725 129 A1 relates to a method for controlling a laundry washing machine wherein water and detergent is loaded and the washing tub, the drum is rotated preset high speed in a first rotational direction in order to perform at least one intermediate spin, reducing the speed of the drum at a wash speed is reduced, and the drum is rotated at a preset high level in a second rotational direction opposite to the first rotational order.

Accordingly, the present invention is directed to a method of controlling a washing machine that substantially obviates one or more problems due to the limitations and disadvantages of the related art.

One object of the present invention is to provide a method of controlling a washing machine that enables wash water to easily clean a tub while circulating along the inner circumferential surface of the tub.

The object is achieved by the features of the independent claim 1. Dependent claims refer to preferred embodiments.

Additional advantages, objects, and features will be set forth in part in the description which follows and in part will become apparent to those having ordinary skill in the art upon examination of the following or may be learned from practice. The objectives and other advantages may be realized and attained by the structure particularly pointed out in the written description and claims hereof as well as the appended drawings.

The present invention relates to a method of controlling a washing machine comprising: a spin-drying step of accelerating the drum performed at the last stage of the washing cycle to remove moisture from laundry received in the drum; a water supply step of supplying wash water into a tub while rotating a drum at a water supply rotational speed, the drum being decelerated to the water supply rotational speed when the spin-drying step is finished, and then the drum starts to be rotated at the water supply rotational speed; an acceleration step of accelerating the drum and sensing an eccentric amount of the drum after the water supply step; and a cleaning step of rotating the drum such that the wash water cleans an inner circumferential surface of the tub while being circulated along the inner circumferential surface of the tub by a rotational force of the drum and setting a rotational speed of the drum based on the sensed eccentric amount.

The cleaning step may include a first cleaning step of setting the rotational speed of the drum to a first rotational speed when the sensed eccentric amount exceeds a reference eccentric amount and a second cleaning step of setting the rotational speed of the drum to a second rotational speed, which is higher than the first rotational speed, when the sensed eccentric amount is equal to or less than the reference eccentric amount.

The first cleaning step may comprise rotating the drum at the first rotational speed such that the wash water forms a circulating current for cleaning the inner circumferential surface of the tub while being circulated along the inner circumferential surface of the tub by a rotational force of the drum when the sensed eccentric amount exceeds a reference eccentric amount.

The second cleaning step may comprise rotating the drum at the second rotational speed, which is higher than the first rotational speed, such that the wash water forms the circulating current when the sensed eccentric amount is equal to or less than the reference eccentric amount.

The first rotational speed may be higher than the water supply rotational speed and may be lower than the resonance frequency of a transient period.

The second rotational speed may be higher than the resonance frequency of the transient period.

At the first cleaning step, the eccentric amount of the drum may be sensed.

The first cleaning step may be finished when the eccentric amount of the drum sensed at the first cleaning step exceeds the reference eccentric amount.

At the water supply step, the eccentric amount of the drum may be sensed, the drum may be accelerated based on the sensed eccentric amount, and it may be determined whether the cleaning step is to be performed.

At the water supply step, the eccentric amount of the drum may be sensed, the drum may be accelerated based on the sensed eccentric amount, and it may be determined whether the first cleaning step or the second cleaning step is to be performed. In other words, only one selected from between the first cleaning step and the second cleaning step may be performed after the acceleration step depending on the sensed eccentric amount of the drum.

The water supply rotational speed may be the minimum rotational speed at which the laundry moving along the drum is prevented from being separated from the inner circumferential surface of the drum due to a centrifugal force.

At the water supply step, the wash water may be supplied into the tub up to a predetermined water level, and a drainage pump may be turned off.

At the cleaning step, the drainage pump may be turned off in order to prevent the wash water supplied at the water supply step from being discharged.

The predetermined water level may be equal to or greater than the height from the lower end of the tub to the lower end of the drum.

It is to be understood that both the foregoing general description and the following detailed description of the present invention are exemplary and explanatory and are intended to provide further explanation of the present invention as claimed.

The accompanying drawings, which are included to provide a further understanding of the present invention and are incorporated in and constitute a part of this application, illustrate embodiment(s) of the present invention and together with the description serve to explain the principle of the present invention. In the drawings:
FIG. 1 is a sectional view schematically showing the construction of a washing machine according to an embodiment of the present invention;
FIG. 2 is an enlarged view showing part I of FIG. 1 to describe the flow of wash water;
FIG. 3 is an enlarged view showing part II of FIG. 1 to describe the level of wash water;
FIG. 4 is a block diagram showing the control relationship between main elements of the washing machine shown in FIG. 1;
FIG. 5 is a graph showing a change in the rotational speed of a drum over time in a method of controlling a washing machine according to an embodiment of the present invention; and
FIG. 6 is a flowchart showing the method of controlling the washing machine according to the embodiment of the present invention.

Hereinafter, a washing machine and a method of cleaning a tub of the washing machine according to various embodiments will be described in detail with reference to the accompanying drawings. The following embodiments are illustrative for understanding of the invention, and it should be noted that the present invention can be variously modified in manners different from the embodiments described herein. In the following description of the present invention, however, a detailed description of known functions or configurations incorporated herein will be omitted when it may make the subject matter of the present invention rather unclear. Also, in the accompanying drawings, the size of some elements may be exaggerated, rather than shown in actual scale, to promote understanding of the invention.

It will be understood that although the terms "first" and "second" may be used herein to describe various components, these components are not to be limited by these terms. These terms are only used to distinguish one component from another component.

In addition, the terminology used in the present application is for the purpose of describing particular embodiments only and is not intended to limit the scope of right of the invention. The singular form is intended to include the plural form as well, unless the context clearly indicates otherwise. In the present application, it will be further understood that the terms "comprises", includes," etc. specify the presence of stated features, integers, steps, operations, elements, components, or combinations thereof, but do not preclude the presence or addition of one or more other features, integers, steps, operations, elements, components, or combinations thereof.

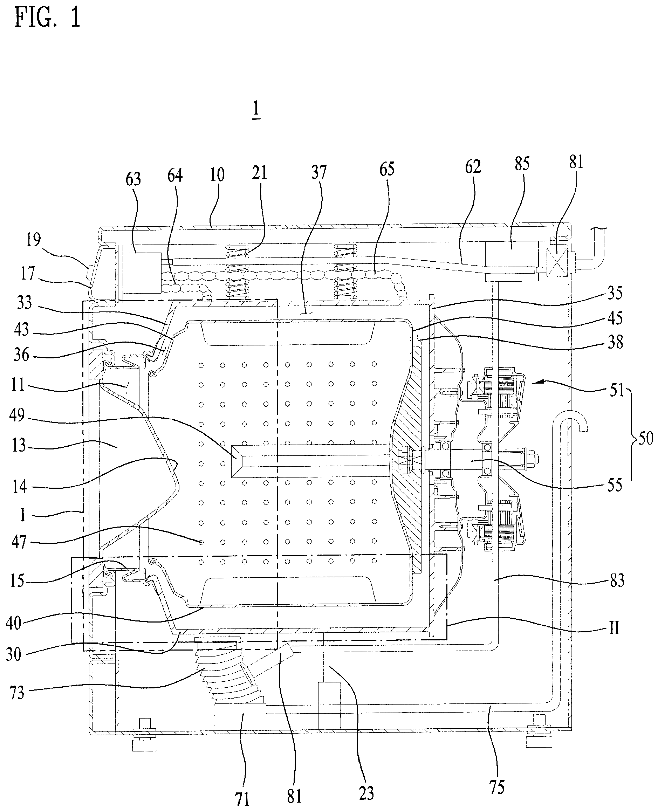

FIG. 1 is a sectional view schematically showing the construction of a washing machine 1 according to an embodiment of the present invention.

Referring to FIG. 1, the washing machine 1 includes a cabinet 10 having a laundry introduction port 11 formed in the front thereof, a door 13 mounted to the laundry introduction port 11 of the cabinet 10 for opening and closing the laundry introduction port 11, a tub 30 mounted in the cabinet 10 for storing wash water, a driving unit 50 including a motor 51 mounted to the tub 30 for generating driving force and a shaft 55 connected to the motor 51, a drum 40 connected to the shaft 55 for washing laundry using the driving force from the motor 51, a water supply unit 60 for supplying water containing detergent or clean water containing no detergent into the tub 30, and a control panel 17 including an input unit 19 for allowing a user to input various control commands and a display unit (not shown) for displaying the operational state of the washing machine.

In this specification, wash water for washing and cleaning water for cleaning a gasket 15, the door 13, the tub 30, and the drum 40 are referred to as wash water.

In FIG. 1, there is shown a direct connection type driving structure in which the motor 51 is directly connected to the shaft 55 in order to drive the drum 40. However, the present invention is not limited thereto. In addition, there is shown a structure in which the control panel 17 is provided at the front of the cabinet 10. However, the present invention is not limited thereto.

The cabinet 10 defines the external appearance of the washing machine 1, and the door 13 is hingedly connected to the front of the cabinet 10 in order to selectively open or close the laundry introduction port 11. Consequently, the user may open the door 13 to put laundry in the drum 40 or remove the laundry from the drum 40.

The inside surface 14 of the door 13, which faces the drum 40, protrudes toward the drum 40. When the user pushes the door 13 to close the door, therefore, laundry is washed while being contained in the drum 40, since a portion of the inside surface of the door is located inside the drum 40. Consequently, the laundry is prevented from being discharged outside the drum 40 during the rotation of the drum 40.

The tub 30 is provided in the cabinet 10 so as to receive wash water. Wash water from an external water supply source is supplied into the tub 30. In addition, the tub 30 is formed in an approximately cylindrical shape, and may be defined by the circumferential surface and opposite ends thereof. The front end of the tub 30 defines the front surface 33 of the tub 30, and the rear end of the tub 30 defines the rear surface 35 of the tub 30. The tub 30 is provided in the front surface 33 thereof with a front opening, which is formed at a position corresponding to the laundry introduction port 11 of the cabinet 10 such that the inside and the outside of the drum 40 communicate with each other through the front opening.

The circumferential surface of tub 30 is elastically supported by a spring 21 and a damper 23 mounted inside the cabinet 10. In addition, the tub 30 cannot rotate, since the circumferential surface of tub 30 is directly supported by the spring 21 and the damper 23. Consequently, rotational force from the motor 51 is not transmitted to the tub 30, unlike the drum 40.

The water supply unit 60 is provided at the upper side of the tub 30. The water supply unit 60 includes a water supply valve 61 for controlling the flow of clean water supplied through an external hose, a water supply hose 62 for guiding the water that has passed through the water supply valve 61, a detergent supply device 63 for mixing the water that has passed through the water supply hose 62 with detergent and discharging the mixture, and a water supply pipe, having one end connected to the discharge port of the detergent supply device 63 and the other end connected to the upper part of the tub 30, for guiding water containing detergent or clean water containing no detergent, discharged from the detergent supply device 63, into the tub 30.

As shown in FIG. 1, the water supply pipe may include a first water supply pipe 64 and a second water supply pipe 65, although the water supply pipe may be a single pipe.

The first water supply pipe 64 and the second water supply pipe 65 are spaced apart from each other in the longitudinal direction of the tub 30. In particular, the first water supply pipe 64 and the second water supply pipe 65 may be disposed at a position corresponding to a frequently contaminated portion of the inner circumferential surface of the tub 30 or the outer circumferential surface of the drum 40 such that wash water is directly sprayed to the frequently contaminated portion of the inner circumferential surface of the tub 30 or the outer circumferential surface of the drum 40. In addition, the first water supply pipe 64 and the second water supply pipe 65 may be bellows pipes, which prevent vibration from the tub 30 from being transmitted to the detergent supply device 63.

Meanwhile, in this embodiment, the water supply pipe is described as being a single pipe or as including a first water supply pipe 64 and a second water supply pipe 65. However, the present invention is not limited thereto. A various number of water supply pipes may be additionally disposed depending on the contamination pattern of the tub 30 or the drum 40.

In addition, a drainage device for draining water is provided at the lower side of the tub 30. The drainage device includes a drainage pump 71 for providing the power necessary to discharge the wash water received in the tub 30, a first drainage pipe 73, having one end connected to the lower side of the tub and the other end connected to the drainage pump 71, for guiding the wash water received in the tub 30 to the drainage pump 71, and a second drainage pipe 75, having one end connected to the drainage pump 71 and the other end connected to the rear surface of the cabinet 10, for guiding the wash water from the drainage pump 71 outside the cabinet 10. The first drainage pipe 73 may be a bellows pipe, which prevents vibration from the tub 30 from being transmitted to the drainage pump 71.

Meanwhile, a water level sensing device is provided in the space between the cabinet 10 and the tub 30. The water level sensing device includes an air chamber 81 connected to the side surface of the first drainage pipe 73, which is a bellows pipe, the air chamber 81 being filled with a predetermined amount of air, a water level sensing tube 83 connected to the air chamber 81, the water level sensing tube 83 being filled with air transmit pressure, and a pressure sensor 85 connected to the water level sensing tube 83 for sensing the level of wash water based on the pressure transmitted through the air in the water level sensing tube 83. When the water level of the tub 30 increases and thus water pressure increases at the portion of the tub to which the air chamber 81 is connected, therefore, the pressure sensor 85 senses the increased water pressure through the air chamber 81 and the water level sensing tube 83, thereby sensing the water level in the tub.

The water level sensing device is described as including a pressure sensor 85. However, the present invention is not limited thereto. For example, the water level sensing device may include a device for measuring the quantity of wash water, rather than water pressure, such as a flow meter.

The gasket 15 is provided between the front of the cabinet 10 and the front opening in the tub 30. The gasket 15 prevents wash water from being introduced into the gap between the door 13 and the front opening in the tub 30, which exists because the tub 30 and the cabinet 10 are spaced apart from each other by a predetermined distance, i.e. the gap between the front of the cabinet 10 and the front opening in the tub 30.

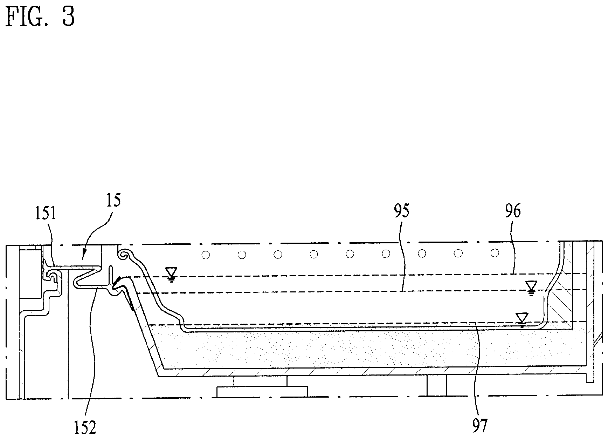

The gasket 15 is made of a soft material so as to prevent the vibration of the tub 30, which is caused by the vibration of the motor 51, from being transmitted to the cabinet 10 via the gasket 15. The gasket 15 includes a door side part 151 and a tub side part 152. In FIG. 3, the tub side part 152 is concave. However, the present invention is not limited thereto. The tub side part 152 may have various shapes.

The drum 40 is rotatably provided in the tub 30 so as to receive laundry. The drum 40 is formed in an approximately cylindrical shape. Like the tub 30, the drum 40 may be defined by the circumferential surface and opposite ends thereof. The front end of the drum 40 defines the front surface 43 of the drum 40, and the rear end of the drum 40 defines the rear surface 45 of the drum 40.

The rear surface 45 of the drum 40 is directly connected to the shaft 55, which is connected to the motor 51, such that the drum 40 receives rotational force from the motor 51. In addition, the drum 40 is provided on the inner circumferential surface thereof with lifters 49 for lifting and dropping the laundry or some of the wash water received in the drum 40 when the drum 40 is rotated by the motor 51. When the drum 40 is rotated by the motor 51, the lifters 49 are rotated together with the drum 40 to lift and drop the laundry or some of the wash water on one side surface of the drum 40.

The drum 40 is provided in the side wall thereof, i.e. the circumferential surface thereof, thereof with a plurality of through holes 47. The drum 40 communicates with the tub 30 via the through holes 47. When a predetermined level of wash water is supplied to the tub 30, the drum 40 is immersed in the wash water, with the result that some of the wash water is introduced into the drum via the through holes 47.

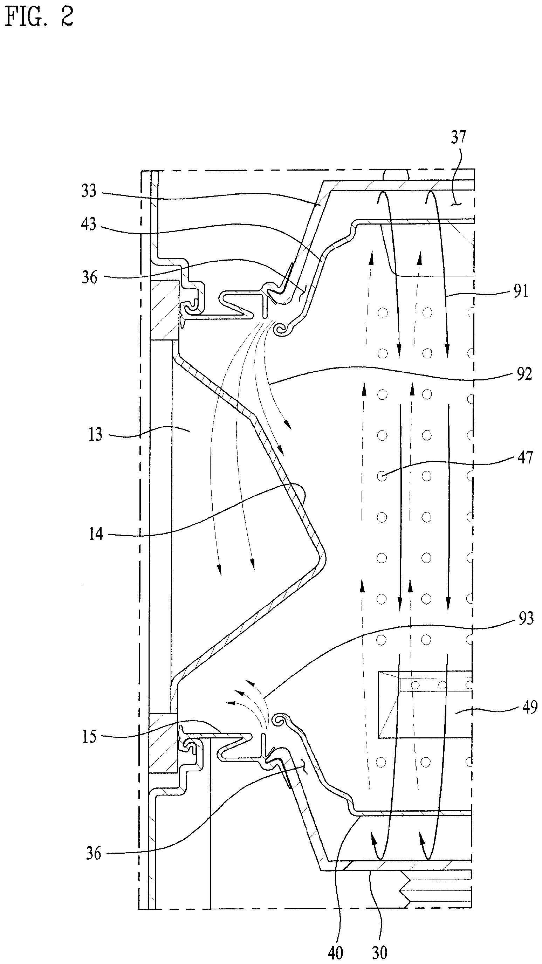

The flow of wash water will be described in detail with reference to FIG. 2. FIG. 2 is an enlarged view showing part I of FIG. 1 to describe the flow of wash water.

Referring to FIG. 2, there is shown a flow pattern including a first flow 91, in which wash water circulates along a tub circumferential gap 37 by the rotational force of the drum 40, a second flow 92, in which wash water drops from the upper part of the front end of the tub 30, i.e. the upper part of the front surface 33 of the tub 30, through a tub front gap 36, and a third flow 93, in which wash water rises from the lower part of the front end of the tub 30, i.e. the lower part of the front surface 33 of the tub 30, through the tub front gap 36.

The first flow 91 is a flow pattern in which wash water cleans the inner circumferential surface of the tub 30 and the outer circumferential surface of the drum 40 while circulating therealong and in which some of the wash water joins the second flow 92 and then drops from the upper parts of the front and rear surfaces 33 and 35 of the tub 30.

The second flow 92 is a flow pattern in which wash water rises to the upper part of the front surface 33 or the rear surface 35 of the tub 30 and then drops so as to circulate. Wash water may circulate even when the wash water does not rise to the uppermost part of the tub 30. In addition, wash water may circulate even when the wash water does not move along the inner circumferential surface of the tub 30. Consequently, the second flow 92 includes the flow of wash water that does not move along the inner circumferential surface of the tub 30. Meanwhile, the second flow 92 cleans the inside surface 14 of the door, the front and rear surfaces of the tub 30 and the drum 40, and the gasket 15.

The third flow 93 is a flow pattern in which wash water comes into tight contact with the inner circumferential surface of the tub 30 due to the centrifugal force generated from the wash water due to the movement of the wash water and is then pushed to the opposite ends of the tub 30. The third flow 93 may clean the gasket 15 and the lower part of the inside surface 14 of the door.

Meanwhile, in order for the wash water to circulate, i.e. move, along the inner circumferential surface of the tub 30 due to the rotational force of the drum 40, at least a portion of the outer circumferential surface of the drum 40 must contact the wash water. To this end, wash water is supplied into the tub up to a predetermined water level.

The level of wash water will be described with reference to FIG. 3. FIG. 3 is an enlarged view showing part II of FIG. 1 to describe the level of wash water.

Referring to FIG. 3, a predetermined level 95 of wash water is equal to or greater than at least the height from the lower end of the tub 30 to the lower end of the drum 40, i.e. the minimum level 97. The reason for this is that wash water can flow due to the friction between the drum 40 only when at least a portion of the drum 40 contacts the wash water.

In addition, the predetermined level 95 of wash water may be set to be higher such that the user can directly check the flow of the wash water during the cleaning operation through the door 13. That is, the predetermined level 95 of wash water may be set to such an extent that the user can visually check whether the tub 30 is being cleaned while viewing the interior of the drum 40 through the door 13.

Meanwhile, the predetermined level 95 of wash water does not have an upper limit. Generally, however, the predetermined level 95 of wash water is set to be lower than a full water level 96. The full water level 96 is a level at which the tub 30 and the drum 40 are fully filled with wash water such that the wash water may overflow the gasket 15.

If the predetermined level 95 of wash water is set to the full water level 96, the wash water may be pushed to the door 13, whereby the wash water may leak. In addition, the frictional force between the drum 40 and the wash water increases, with the result that noise and vibration may be caused, and the motor 51 may be overloaded.

The predetermined level of wash water equally applies to a tilted type washing machine 1, in which the shaft 55 is inclined at a predetermined angle with respect to the ground, in addition to the washing machine 1 shown in FIGs. 1 to 3, in which the shaft 55 is parallel to the ground. Of course, in this case, the height of the front part of the drum immersed in the wash water and the height of the rear part of the drum immersed in the wash water may be different, since the front part of the drum 40 is higher from the ground than the rear part of the drum 40.

Meanwhile, the input unit 19, which allows the user to input a command for cleaning the inner circumferential surface of the tub 30, may be further provided at the position at which the control panel 17 is located. That is, in a general washing machine 1, a rotary knob or buttons for allowing the user to input a command for operating the washing machine 1 are provided on the control panel. Consequently, the input unit 19, which allows the user to input a command for cleaning the tub 30, may be provided at the rotary knob, or an additional button may be provided. Of course, the washing machine may be configured such that the tub 30 can also be cleaned when a conventional operation mode is input. Consequently, the operation of cleaning the inner circumferential surface of the tub 30 may be performed by default or optionally.

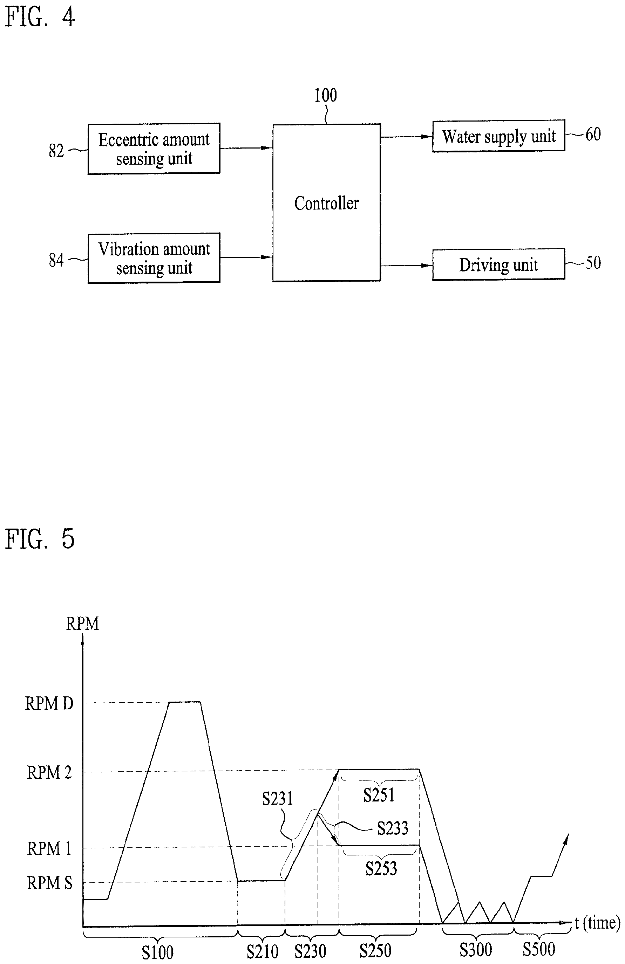

Referring to FIG. 4, the washing machine includes an eccentric amount sensing unit 82, a vibration amount sensing unit 84, a water supply unit 60, a driving unit 50, and a controller 100, as elements for performing a control method, a description of which will follow. In the following description, the term "laundry" means clothes.

The eccentric amount sensing unit 82 senses the eccentric amount of the drum 40. For example, the eccentric amount sensing unit 82 may sense the eccentric amount of the drum 40 based on variation in the rotational speed of the driving unit 50, which is changed depending on the distribution of laundry. To this end, a speed sensing unit (not shown) for sensing the rotational speed of the driving unit 50 may be provided separately from the driving unit 50. Alternatively, an output current value of the driving unit 50 may be measured using a current sensing unit (not shown), such as an encoder, provided in the driving unit 50, and the eccentric amount may be sensed based on a change in the output current value. The eccentric amount sensing unit 82 transmits the sensed eccentric amount of the drum 40 to the controller 100 such that the controller 100 can control the water supply unit 60 or the driving unit 50.

The vibration amount sensing unit 84, which senses vibration generated during the rotation of the drum 40, may be provided separately from the eccentric amount sensing unit 82. The vibration amount sensing unit 84 may sense the vibration amount based on the displacement or vibration cycle of a mass body that moves according to vibration generated during the rotation of the drum 40. The vibration amount sensing unit 84 transmits the sensed vibration amount of the drum 40 to the controller 100 such that the controller 100 can control the water supply unit 60 or the driving unit 50.

The water supply unit 60 may supply water containing detergent or clean water containing no detergent into the tub 30.

The driving unit 50 provides the driving force necessary to rotate the drum 40. In this embodiment, the driving unit 50 includes the motor 51 and the shaft 55 having one end connected to the motor 51 and the other end connected to the drum 40.

The controller 100 controls the driving unit 50 according to a signal input through the input unit or a process that is input in advance to perform a washing process including a washing cycle, a rinsing cycle, and a spin-drying cycle. During the washing process, the controller 100 continuously receives signals generated by the eccentric amount sensing unit 82 and the vibration amount sensing unit 84 to control the water supply unit 60 and the driving unit 50. In addition, the controller 100 controls the display unit to display respective steps.

Specifically, the controller 100 controls the water supply unit 60 to set the level of wash water in the tub 30 and controls the driving unit 50 to set the rotational speed of the motor 51 such that the wash water supplied into the tub 30 cleans the inner circumferential surface of the tub 30 while being circulated along the inner circumferential surface of the tub 30 by the rotational force of the drum 40 and then cleans the door 13 and the gasket 15 while dropping from the upper parts of the opposite ends of the tub 30.

Hereinafter, a method of controlling the washing machine 1 according to an embodiment of the present invention will be described in detail with reference to FIG. 5. FIG. 5 is a graph showing a change in the rotational speed of the drum 40 over time in a method of controlling a washing machine according to an embodiment of the present invention.

Referring to FIG. 5, the method of controlling the washing machine according to the embodiment of the present invention includes a spin-drying step (S100), a water supply step (S210), an acceleration step (S230), and a cleaning step (S250).

The spin-drying step (S100) is a step of rotating the drum 40 at a spin-drying rotational speed (denoted as "RPM D" in Fig.5) to remove moisture from laundry received in the drum 40. Generally, a washing process includes a washing cycle, a rinsing cycle, and a spin-drying cycle. Each cycle may include a spin-drying step (S100) of removing moisture from laundry. That is, the spin-drying step (S100) does not fixedly belong to a specific one selected from among the washing cycle, the rinsing cycle, and the spin-drying cycle, but may belong to any cycle in order to improve efficiency. For example, the spin-drying step may be included in the washing cycle or the rinsing cycle.

In the method of controlling the washing machine according to the embodiment of the present invention, the case in which the spin-drying step (S100) is spin drying for washing performed at the last stage of the washing cycle will be described by way of example.

The spin-drying step (S100) is a step at which the drum 40 is rotated at the spin-drying rotational speed (RPM D) for a predetermined time and then is decelerated to a water supply rotational speed (denoted as "RPM S" in Fig. 5), a description of which will follow, to discharge the wash water containing the detergent and the contaminants, removed from the laundry, from the tub 30. At this time, the drum 40 may be decelerated to the water supply rotational speed (RPM S) without being stopped while being rotated at the spin-drying rotational speed (RPM D). In order to smoothly discharge the wash water, the spin-drying step (S100) is performed in the state in which the drainage pump 71 is on.

When the spin-drying step (S100) is performed, the wash water containing the detergent is removed from the laundry in the state in which the laundry is in tight contact with the inner circumferential surface of the drum 40. In addition, a considerable amount of detergent and contaminants of the laundry in the tub 30 is removed. Consequently, the water supply step (S210), the acceleration step (S230), and the cleaning step (S250) may be performed in the state in which the degree of contamination is relatively low, i.e. in the state in which a considerable amount of detergent and contaminants is removed.

The water supply step (S210) is performed after the spin-drying step (S100). The water supply step (S210) is a step of supplying wash water into the tub 30 from outside. At the water supply step (S210), the drum 40 is rotated at the water supply rotational speed (RPM S).

At the water supply step (S210), the drainage pump 71 remains off until a predetermined time of a rinsing step (S300) of the rinsing cycle. Consequently, the wash water supplied at the water supply step (S210) is not discharged from the tub while the cleaning step (S250) is performed such that the wash water can be used as rinsing water at the subsequent rinsing step (S300). At the rinsing step (S300), therefore, it is not necessary to further supply an amount of wash water corresponding to the amount of the wash water supplied at the water supply step (S210).

Meanwhile, the rotation of the drum 40 is not stopped when the spin-drying step (S100) is switched to the water supply step (S210). The drum 40 is decelerated to the water supply rotational speed (RPM S) at the end of the spin-drying step (S100) and then starts to rotate at the water supply rotational speed (RPM S) at the beginning of the water supply step (S210).

The water supply rotational speed (RPM S) may be defined as the minimum rotational speed at which the laundry moving along the drum 40 is prevented from being separated from the inner circumferential surface of the drum 40 due to centrifugal force. That is, when the drum 40 is rotated, a centrifugal force of 1G or higher may be applied to the laundry. The water supply rotational speed (RPM S), which is the rotational speed at which the laundry comes into tight contact with the inner circumferential surface of the drum 40, may range from about 60 to 110 revolutions per minute, RPM. However, the water supply rotational speed (RPM S) may be set to 108 RPM in consideration of the subsequent cleaning step (S250).

If the water supply rotational speed (RPM S) is too high, the pressure sensor 85, which measures the water level, may malfunction. That is, when the drum 40 is rotated at a high rotational speed, the level of the wash water at one side of the drum 40 rises, whereas the level of the wash water at the other side of the drum 40 drops. In the case in which the first drainage pipe 73 is connected to the side at which the level of the wash water rises, the water pressure applied to the first drainage pipe 73 increases with the rise in the water level. At this time, the force of the increased water pressure is applied to the air chamber 81, which is connected to the side surface of the first drainage pipe 73, whereby the pressure sensor 85 may sense a water level higher than the actual water level. In order to prevent the pressure sensor 85 from incorrectly sensing the water level, therefore, it is necessary to set the water supply rotational speed (RPM S) to a rotational speed at which the water pressure increases due to the rotation of the drum 40.

At the water supply step (S210), wash water is supplied into the tub 30 up to a predetermined water level. As previously described, at the water supply step (S210), wash water is supplied such that the predetermined level of wash water is equal to or higher than the height from the lower end of the tub 30 to the lower end of the drum 40, i.e. the minimum level. Particularly, at the water supply step (S210), wash water may be supplied to such an extent that the user can visually check whether the tub 30 is being cleaned while viewing the interior of the drum 40 through the door. At this time, the predetermined water level may be lower than a full water level, i.e. a water level at which the tub 30 and the drum 40 are fully filled with wash water such that the wash water may overflow the gasket.

Meanwhile, laundry received in the drum 40 has different water content ratios depending on the kind of laundry. Consequently, when the spin-drying step (S100), at which moisture is removed from the laundry, is performed, the distribution of the moisture contained in the laundry received in the drum 40 is changed, with the result that the eccentric amount of the drum 40 may be changed. In addition, during the water supply step (S210), the laundry received in the drum 40 remains in tight contact with the inner circumferential surface of the drum 40. However, the distribution of the moisture contained in the laundry received in the drum 40 may be partially changed due to the supply of wash water.

At the water supply step (S210), therefore, the eccentric amount of the drum may be sensed before the acceleration step (S230), at which the drum 40 is accelerated, is performed. Here, eccentricity means a phenomenon in which the laundry, i.e. the clothes, is biased to one side of the drum 40 due to tangling of the laundry, whereby one side of the drum becomes heavier on the basis of the center of the drum 40, and an eccentric amount means the degree of eccentricity, expressed as a value. When the drum 40 is rotated at a high speed in the state in which the laundry in the drum 40 is eccentric, for example, when the laundry is spin-dried, vibration and noise may be generated due to imbalance between the geometrical center of the axis of rotation of the drum 40 and the actual center of gravity of the drum 40.

When the eccentric amount sensed at the water supply step (S210) is equal to or less than a reference eccentric amount, the acceleration step (S230) is performed. When the sensed eccentric amount is greater than the reference eccentric amount, the drainage pump 71 is turned on to drain the residual wash water from the tub 30. Subsequently, the water supply step (S210) is performed again to sense the eccentric amount. The above operation is repeatedly performed until the sensed eccentric amount is equal to or less than the reference eccentric amount. However, if the above operation is performed too many times, energy consumption, that is, power consumption, increases. Consequently, all steps may be finished if the above operation is repeated a predetermined number of times.

The acceleration step (S230) is a step that is performed between the water supply step (S210) and the cleaning step (S250). At the acceleration step (S230), the drum 40 is accelerated to perform the cleaning step (S250). At the acceleration step (S230), the eccentric amount of the drum 40 is sensed during the acceleration of the drum 40. The acceleration step (S230) includes a first acceleration step (S231) and a second acceleration step (S233). Although the eccentric amount of the drum 40 is described as being sensed during the acceleration of the drum 40, the present invention is not limited thereto. The vibration amount of the drum 40 may be sensed. The vibration amount of the drum 40 is based on the eccentric amount of the drum 40. When the vibration amount of the drum 40 may be sensed, therefore, the eccentric amount of the drum 40 may also be sensed.

The first acceleration step (S231) is a step at which the eccentric amount of the drum 40 is sensed while the drum 40 is accelerated. When the sensed eccentric amount is not greater than the reference eccentric amount, the drum 40 is accelerated to a second rotational speed (denoted as "RPM 2" in Fig. 5), which is the rotational speed of the drum 40 at a second cleaning step (S251), a description of which will follow. Subsequently, the second cleaning step (S251) is performed. When the sensed eccentric amount is greater than the reference eccentric amount, the first acceleration step (S231) is stopped at the time C at which the eccentric amount exceeds the reference eccentric amount, and the second acceleration step (S233) is performed.

At the second acceleration step (S233), the drum 40 is accelerated, but the eccentric amount of the drum 40 is not sensed. At the second acceleration step (S233), the drum 40 is accelerated to a first rotational speed (denoted as "RPM 1" in Fig. 5), which is lower than the second rotational speed (RPM 2). Since the eccentric amount of the drum 40 is greater than the reference eccentric amount, the drum 40 may vibrate severely. For this reason, the first rotational speed (RPM 1) is set to be lower than the rotational speed of the drum 40 at the time C at which the eccentric amount exceeds the reference eccentric amount. Consequently, the acceleration of the drum 40 at the second acceleration step (S233) has a negative value. Subsequently, a first cleaning step (S253) is performed.

Consequently, the success rate at the cleaning step (S250) is higher than in a conventional control method, in which, when the eccentric amount exceeds the reference eccentric amount in the acceleration period, the rotation of the drum 40 is stopped, whereby the cleaning step (S250) is no longer performed.

The cleaning step (S250) is a step of rotating the drum 40 such that wash water cleans the inner circumferential surface of the tub 30 while being circulated along the inner circumferential surface of the tub 30 by the rotational force of the drum 40. At the cleaning step (S250), no wash water is supplied into the tub 30, and the drainage pump 71 remains off in order to prevent the discharge of wash water.

At the cleaning step (S250), wash water circulates according to the flow pattern, which includes the first to third flows 91, 92, and 93. The wash water circulating according to the flow pattern may be defined as a circulating current. According to the first to third flows 91, 92, and 93, the circulating current includes all flows of wash water circulating between the tub 30 and the drum 40 together with the flow of wash water moving along the inner circumferential surface of the tub 30. The inner circumferential surface of the tub 30, the outer circumferential surface of the drum 40, the gasket 15 and the inside surface 14 of the door are cleaned by the circulating current having the flow pattern.

In addition, at the cleaning step (S250), the rotational speed of the drum 40 may be set to any of at least two rotational speeds depending on the eccentric amount sensed at the acceleration step (S230), as previously described. In this embodiment, the rotational speed of the drum 40 is set to one of two rotational speeds.

The cleaning step (S250) includes a first cleaning step (S253), at which the rotational speed of the drum 40 is set to the first rotational speed (RPM 1) when the eccentric amount sensed at the acceleration step (S230), i.e. the first acceleration step (S231), is greater than the reference eccentric amount, and a second cleaning step (S251), at which the rotational speed of the drum 40 is set to the second rotational speed (RPM 2), which is higher than the first rotational speed (RPM 1), when the eccentric amount sensed at the acceleration step (S230), i.e. the first acceleration step (S231), is equal to or less than the reference eccentric amount.

The first cleaning step (S253) and the second cleaning step (S251) are selectively performed. That is, only one selected from between the first cleaning step (S253) and the second cleaning step (S251) is performed after the acceleration step (S230) depending on the eccentric amount of the drum 40.

The first cleaning step (S253) is a step at which the drum 40 is rotated at the first rotational speed (RPM 1), which is higher than the water supply rotational speed (RPM S), such that wash water forms a circulating current for cleaning the inner circumferential surface of the tub 30, the door 13, and the gasket 15 while being circulated along the inner circumferential surface of the tub 30 by the rotational force of the drum 40. The reason for this is that such a circulating current is not formed when the drum 40 is only rotated at the water supply rotational speed (RPM S).

In addition, the first rotational speed (RPM 1) of the first cleaning step (S253) is set to be lower than the resonance frequency of a transient period. When the drum 40 is rotated in the transient period, resonance occurs in the washing machine 1, with the result that the magnitudes of noise and vibration of the washing machine considerably increase, since the eccentric amount of the drum 40 exceeds the reference eccentric amount. Such noise and vibration of the washing machine 1 make the user uncomfortable, and moreover disturb the acceleration of the drum 40.

Here, the transient period may be defined as a predetermined rotational speed range including one or more resonance frequencies at which resonance occurs depending on the system of the washing machine 1. The transient period is a unique vibration characteristic that occurs depending on the system of the washing machine 1 when the system of the washing machine 1 is set. The transient period is changed depending on the system of the washing machine 1. For example, the washing machine 1 according to the embodiment of the present invention may have a first transient period range of about 130 to 150 RPM and a second transient period range of about 150 to 180 RPM.

At the first cleaning step (S253), therefore, the first rotational speed (RPM 1) is set to about 108 to 120 RPM, and the eccentric amount of the drum 40 is additionally sensed. Only when the sensed eccentric amount is equal to or less than the reference eccentric amount, the first cleaning step (S253) is performed. When the sensed eccentric amount exceeds the reference eccentric amount, the first cleaning step (S253) is finished.

As described above, the second cleaning step (S251) and the first cleaning step (S253) are selectively performed. The second cleaning step (S251) is a step at which the drum 40 is rotated at the second rotational speed (RPM 2), which is higher than the first rotational speed (RPM 1), such that the wash water forms the circulating current. The second rotational speed (RPM 2) is set to about 180 RPM, which is higher than the resonance frequency of the transient period.

At the second cleaning step (S251), the eccentric amount of the drum 40 may be sensed while the drum 40 is rotated at the second rotational speed (RPM 2). When the eccentric amount sensed at the acceleration step (S230) does not exceed the reference eccentric amount, however, the eccentric amount of the drum 40 is not greatly changed in most cases. Consequently, the eccentric amount of the drum 40 may not be sensed in order to reduce the time necessary to clean the tub 30.

When the cleaning step (S250) is finished, the drum 40 is no longer rotated, and is stopped. Subsequently, a rinsing cycle including a rinsing step (S300) is performed.

Additional supply of water may be performed for the rinsing cycle. Such additional supply of water is performed in order to supply an amount of wash water determined by subtracting the amount of wash water supplied at the water supply step (S210) from the amount of wash water necessary to perform the rinsing cycle. Even when wash water is supplied at the water supply step (S210), therefore, only the amount of wash water obtained by subtracting the supplied amount of wash water from the amount of wash water necessary to perform the rinsing cycle is additionally supplied at the subsequent rinsing cycle. Consequently, a larger amount of wash water need not be used in order to perform the cleaning step (S250).

When the rinsing cycle including the rinsing step (S300) is finished, a spin-drying cycle including a spin-drying step (S500) is performed.

Meanwhile, the method of controlling the washing machine 1 according to the embodiment of the present invention may further include a course recognition step (not shown) of recognizing at least one from among a plurality of courses including the cleaning step (S250) of cleaning the tub 30. At the course recognition step, various washing courses for performing washing may be selected.

The user may perform manipulation through the input unit provided at the position at which the control panel is located such that the cleaning step (S250) is performed by default or optionally. If the user does not select the cleaning step (S250), the cleaning step (S250) may be performed as described above, i.e. by default. When the user selects the cleaning step (S250) through the input unit, i.e. when the cleaning step (S250) is optionally performed, the cleaning step (S250) may be recognized at the course recognition step, and control may be performed such that the cleaning step (S250) is performed immediately before the rinsing cycle is finished. In the case in which the user selects the cleaning step (S250) such that the cleaning step (S250) is performed optionally, improved effects due to the execution of the cleaning step (S250) are expected. Consequently, control may be performed such that the cleaning step (S250) is performed after contaminants are removed from the tub 30 through the execution of at least one rinsing step (S300).

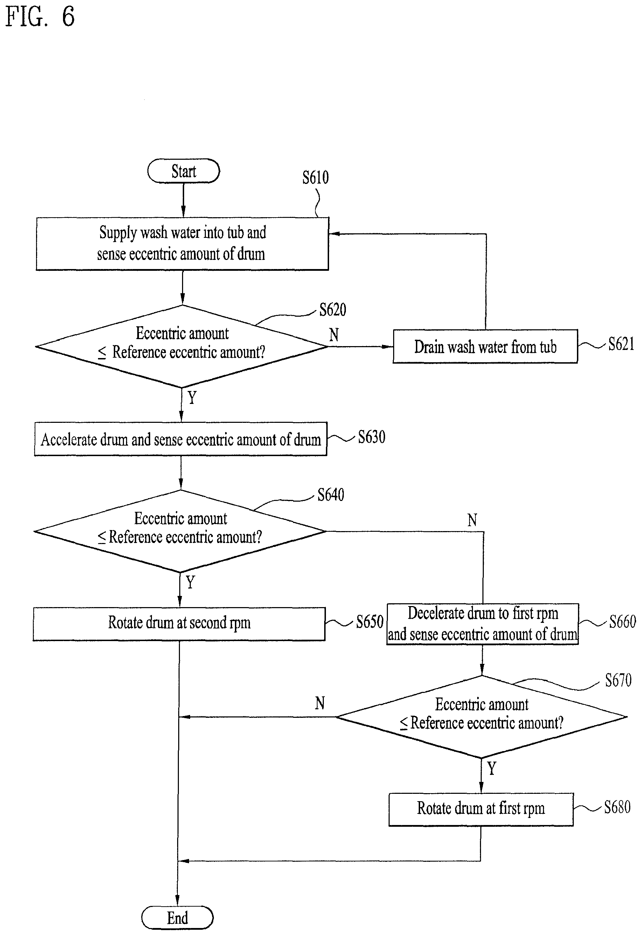

The steps of the method of controlling the washing machine according to the embodiment of the present invention will be described in detail with reference to FIG. 6. FIG. 6 is a flowchart showing the method of controlling the washing machine according to the embodiment of the present invention. In the method of controlling the washing machine shown in FIG. 6, the spin-drying step (S100) is omitted.

Referring to FIG. 6, first, the eccentric amount of the drum 40 is sensed while wash water is supplied during the rotation of the drum 40 at the water supply rotational speed (RPM S) (S610).

When the eccentric amount sensed while the drum 40 is rotated at the water supply rotational speed does not exceed the reference eccentric amount (S620-Y), the eccentric amount of the drum 40 is continuously sensed while the drum 40 is accelerated (S630).

When the eccentric amount sensed while the drum 40 is rotated at the water supply rotational speed exceeds the reference eccentric amount (S620-N), all of the wash water is drained from the tub 30 (S621), the drum 40 is rotated at the water supply rotational speed, and the eccentric amount of the drum 40 is sensed while wash water is supplied (S610).

When the eccentric amount of the accelerated drum 40 does not exceed the reference eccentric amount (S640-Y), the drum 40 is rotated at the second rotational speed (RPM 2) (S650). Subsequently, the cleaning step (S250) is finished after the lapse of a predetermined time.

When the eccentric amount of the accelerated drum 40 exceeds the reference eccentric amount (S640-N), the drum 40 is decelerated to the first rotational speed (RPM 1) and the eccentric amount of the drum 40 is sensed while the drum 40 is rotated (S660).

When the eccentric amount of the drum 40 rotating at the first rotational speed (RPM 1) does not exceed the reference eccentric amount (S670-Y), the drum 40 is continuously rotated at the first rotational speed (RPM 1) (S680). Subsequently, the cleaning step (S250) is finished after the lapse of a predetermined time.

When the eccentric amount of the drum 40 rotating at the first rotational speed (RPM 1) exceeds the reference eccentric amount (S670-N), the rotation of the drum 40 is stopped, and the cleaning step (S250) is finished.

As is apparent from the above description, the washing machine according to the present invention has the following effects.

First, it is possible to remove contaminants or scale from the inner circumferential surface of the tub and the outer circumferential surface of the drum.

Second, it is possible to easily clean the tub without using an additional tub cleaning device.

Third, it is possible to clean the tub at a high success rate.

Fourth, it is not necessary to use any special detergent for tub cleaning. Even if necessary, it is possible to effectively clean the tub using a small amount of such detergent, whereby it is possible to clean the tub in an environmentally friendly manner.

Fifth, it is possible to clean the inside surface of the door and the gasket simultaneously with the cleaning of the inner circumferential surface of the tub and the outer circumferential surface of the drum.

Although the exemplary embodiments have been illustrated and described as above, of course, it will be apparent to those skilled in the art that the embodiments are provided to assist understanding of the present invention and the present invention is not limited to the above described particular embodiments, and various modifications and variations can be made in the present invention without departing from the scope of the present invention as defined by the claims, and the modifications and variations should not be understood individually from the viewpoint or scope of the present invention.

## Claims

1. A method of controlling a washing machine (1) comprising:
a spin-drying step (S100) of accelerating the drum (40) performed at the last stage of the washing cycle to remove moisture from laundry received in the drum (40);
a water supply step (S210) of supplying wash water into a tub (30) while rotating a drum (40) at a water supply rotational speed, the drum (40) being decelerated to the water supply rotational speed when the spin-drying step is finished, and then the drum (40) starts to be rotated at the water supply rotational speed;
an acceleration step (S230) of accelerating the drum (40) and sensing an eccentric amount of the drum (40) after the water supply step; and
a cleaning step (S251, S253) of rotating the drum (40) such that the wash water cleans an inner circumferential surface of the tub (30) while being circulated along the inner circumferential surface of the tub (30) by a rotational force of the drum (40) and setting a rotational speed of the drum (40) based on the sensed eccentric amount.

2. The method according to claim 1, wherein the cleaning step comprises:
a first cleaning step (S253) of setting the rotational speed of the drum (40) to a first rotational speed when the sensed eccentric amount exceeds a reference eccentric amount; and
a second cleaning step (S251) of setting the rotational speed of the drum (40) to a second rotational speed, which is higher than the first rotational speed, when the sensed eccentric amount is equal to or less than the reference eccentric amount.

3. The method according to claim 2, wherein:
the first cleaning step (S253) comprises rotating the drum (40) at the first rotational speed such that the wash water forms a circulating current for cleaning the inner circumferential surface of the tub (30) while being circulated along the inner circumferential surface of the tub (30) by a rotational force of the drum (40) when the sensed eccentric amount exceeds a reference eccentric amount; and
the second cleaning step (S251) comprises rotating the drum (40) at the second rotational speed, which is higher than the first rotational speed, such that the wash water forms the circulating current when the sensed eccentric amount is equal to or less than the reference eccentric amount.

4. The method according to claim 2 or 3, wherein the first rotational speed is higher than the water supply rotational speed and is lower than a resonance frequency of a transient period, which is defined as a predetermined rotational speed range including one or more resonance frequencies at which resonance occurs depending on the system of the washing machine (1).

5. The method according to claim 4, wherein the second rotational speed is higher than the resonance frequency of the transient period.

6. The method according to any one of claims 2 to 5, wherein, at the first cleaning step (S253), the eccentric amount of the drum is sensed.

7. The method according to claim 6, wherein the first cleaning step (S253) is finished when the eccentric amount of the drum (40) sensed at the first cleaning step (S253) exceeds the reference eccentric amount.

8. The method according to any one of claims 1 to 7, wherein, at the water supply step (S210), the eccentric amount of the drum (40) is sensed, the drum (40) is accelerated based on the sensed eccentric amount, and it is determined whether the cleaning step is to be performed.

9. The method according to claim 8, and it is determined whether the first cleaning step (S253) or the second cleaning step (S251) is to be performed.

10. The method according to any one of claims 1 to 9, wherein the water supply rotational speed is a minimum rotational speed at which the laundry moving along the drum (40) is prevented from being separated from the inner circumferential surface of the drum (40) due to a centrifugal force.

11. The method according to to any one of claims 1 to 10, wherein, at the water supply step (S210), the wash water is supplied into the tub (30) up to a predetermined water level, and a drainage pump (71) is turned off.

12. The method according to claim 11, wherein, at the cleaning step (S251, S253), the drainage pump (71) is turned off in order to prevent the wash water supplied at the water supply step from being discharged.

13. The method according to claim 11 or 12, wherein the predetermined water level is equal to or greater than a height from a lower end of the tub to a lower end of the drum (40).

## Patentansprüche

1. Verfahren zur Steuerung einer Waschmaschine (1), mit:
einem im letzten Abschnitt des Waschzyklus durchgeführten Schleuder-Trocknungsschritt (S100) zum Beschleunigen der Trommel (40), um Feuchtigkeit aus der in der Trommel (40) aufgenommenen Wäsche zu entfernen;
einem Wasserzufuhrschritt (S210), bei dem einem Bottich (30) Waschwasser zugeführt wird, während eine Trommel (40) mit einer Wasserzufuhr-Drehzahl gedreht wird, wobei die Trommel (40) auf die Wasserzufuhr-Drehzahl verlangsamt wird, wenn der Schleuder-Trocknungsschritt beendet ist, und danach die Trommel (40) beginnt, mit der Wasserzufuhr-Drehzahl gedreht zu werden;
einem Beschleunigungsschritt (S230), bei dem die Trommel (40) beschleunigt wird und ein Exzenterbetrag der Trommel (40) nach dem Wasserzufuhrschritt erfasst wird; und
einem Reinigungsschritt (S251, S253), bei dem die Trommel (40) gedreht wird, so dass das Waschwasser eine Innenumfangsfläche des Bottichs (30) reinigt, während es entlang der Innenumfangsfläche des Bottichs (30) durch eine Drehkraft der Trommel (40) umgewälzt wird, und eine Drehzahl der Trommel (40) auf der Grundlage des erfassten Exzenterbetrags eingestellt wird.

2. Verfahren nach Anspruch 1, wobei der Reinigungsschritt aufweist:
einen ersten Reinigungsschritt (S253), bei dem die Drehzahl der Trommel (40) auf eine erste Drehzahl eingestellt wird, wenn der erfasste Exzenterbetrag einen Referenz-Exzenterbetrag überschreitet; und
einen zweiten Reinigungsschritt (S251), bei dem die Drehzahl der Trommel (40) auf eine zweite Drehzahl eingestellt wird, die höher als die erste Drehzahl ist, wenn der gemessene Exzenterbetrag gleich oder kleiner ist als der Referenz-Exzenterbetrag.

3. Verfahren nach Anspruch 2, wobei:
der erste Reinigungsschritt (S253) das Drehen der Trommel (40) mit der ersten Drehzahl aufweist, so dass das Waschwasser einen Umwälzstrom zum Reinigen der Innenumfangsfläche des Bottichs (30) bildet, während es entlang der Innenumfangsfläche des Bottichs (30) durch eine Drehkraft der Trommel (40) umgewälzt wird, wenn der erfasste Exzenterbetrag einen Referenz-Exzenterbetrag überschreitet; und
der zweite Reinigungsschritt (S251) das Drehen der Trommel (40) mit der zweiten Drehzahl aufweist, die höher als die erste Drehzahl ist, so dass das Waschwasser den Umwälzstrom bildet, wenn der erfasste Exzenterbetrag gleich oder kleiner ist als der Referenz-Exzenterbetrag.

4. Verfahren nach Anspruch 2 oder 3, wobei die erste Drehzahl höher als die Wasserzufuhrdrehzahl und niedriger als eine Resonanzfrequenz einer Übergangsperiode ist, die als vorgegebener Drehzahlbereich definiert ist, der eine oder mehrere Resonanzfrequenzen enthält, bei denen in Abhängigkeit vom System der Waschmaschine (1) eine Resonanz auftritt.

5. Verfahren nach Anspruch 4, wobei die zweite Drehzahl höher als die Resonanzfrequenz der Übergangsperiode ist.

6. Verfahren nach einem der Ansprüche 2 bis 5, wobei im ersten Reinigungsschritt (S253) der Exzenterbetrag der Trommel gemessen wird.

7. Verfahren nach Anspruch 6, wobei der erste Reinigungsschritt (S253) beendet wird, wenn der im ersten Reinigungsschritt (S253) gemessene Exzenterbetrag der Trommel (40) den Referenz-Exzenterbetrag überschreitet.

8. Verfahren nach einem der Ansprüche 1 bis 7, wobei im Wasserzufuhrschritt (S210) der Exzenterbetrag der Trommel (40) erfasst wird, die Trommel (40) auf der Grundlage des erfassten Exzenterbetrags beschleunigt wird, und bestimmt wird, ob der Reinigungsschritt durchzuführen ist.

9. Verfahren nach Anspruch 8, wobei bestimmt wird, ob der erste Reinigungsschritt (S253) oder der zweite Reinigungsschritt (S251) durchgeführt werden soll.

10. Verfahren nach einem der Ansprüche 1 bis 9, wobei die Wasserzufuhr-Drehzahl eine minimale Drehzahl ist, bei der aufgrund einer Zentrifugalkraft verhindert wird, dass sich die Wäsche, die sich entlang der Trommel (40) bewegt, von der inneren Umfangsfläche der Trommel (40) abtrennt.

11. Verfahren nach einem der Ansprüche 1 bis 10, wobei im Wasserzuführschritt (S210) dem Bottich (30) das Waschwasser bis zu einem vorgegebenen Wasserstand zugeführt wird, und eine Entwässerungspumpe (71) abgeschaltet wird.

12. Verfahren nach Anspruch 11, wobei die Entwässerungspumpe (71) im Reinigungsschritt (S251, S253) abgeschaltet wird, um zu verhindern, dass das im Wasserzufuhrschritt zugeführte Waschwasser abgelassen wird.

13. Verfahren nach Anspruch 11 oder 12, wobei der vorbestimmte Wasserstand gleich oder größer ist als eine Höhe von einem unteren Ende des Bottichs zu einem unteren Ende der Trommel (40).

## Revendications

1. Procédé de commande d'une machine à laver (1) comprenant :
une étape d'essorage (S100) consistant à accélérer le tambour (40) réalisée au dernier stade du cycle de lavage pour enlever de l'humidité de linge reçu dans le tambour (40) ;
une étape d'alimentation en eau (S210) consistant à alimenter en eau de lavage une cuve (30) tout en faisant tourner un tambour (40) à une vitesse de rotation d'alimentation en eau, le tambour (40) étant décéléré à la vitesse de rotation d'alimentation en eau lorsque l'étape d'essorage est finie, puis le tambour (40) commence à tourner à la vitesse de rotation d'alimentation en eau ;
une étape d'accélération (S230) consistant à accélérer le tambour (40) et à capter une quantité d'excentrique du tambour (40) après l'étape d'alimentation en eau ; et
une étape de nettoyage (S251, S253) consistant à faire tourner le tambour (40) de sorte que l'eau de lavage nettoie une surface circonférentielle intérieure de la cuve (30) tout en étant mise en circulation le long de la surface circonférentielle intérieure de la cuve (30) par une force de rotation du tambour (40) et à régler une vitesse de rotation du tambour (40) d'après la quantité d'excentrique captée.

2. Procédé selon la revendication 1, dans lequel l'étape de nettoyage comprend :
une première étape de nettoyage (S253) consistant à régler la vitesse de rotation du tambour (40) à une première vitesse de rotation lorsque la quantité d'excentrique détectée dépasse une quantité d'excentrique de référence ; et
une seconde étape de nettoyage (S251) consistant à régler la vitesse de rotation du tambour (40) à une seconde vitesse de rotation, qui est plus élevée que la première vitesse de rotation, lorsque la quantité d'excentrique captée est inférieure ou égale à la quantité d'excentrique de référence.

3. Procédé selon la revendication 2, dans lequel :
la première étape de nettoyage (S253) comprend la rotation du tambour (40) à la première vitesse de rotation de sorte que l'eau de lavage forme un courant de circulation pour nettoyer la surface circonférentielle intérieure de la cuve (30) tout en étant mise en circulation le long de la surface circonférentielle intérieure de la cuve (30) par une force de rotation du tambour (40) lorsque la quantité d'excentrique captée dépasse une quantité d'excentrique de référence ; et
la seconde étape de nettoyage (S251) comprend la rotation du tambour (40) à la seconde vitesse de rotation, qui est plus élevée que la première vitesse de rotation, de sorte que l'eau de lavage forme le courant de circulation lorsque la quantité d'excentrique captée est inférieure ou égale à la quantité d'excentrique de référence.

4. Procédé selon la revendication 2 ou 3, dans lequel la première vitesse de rotation est plus élevée que la vitesse de rotation d'alimentation en eau et est plus basse qu'une fréquence de résonance d'une période transitoire, qui est définie en tant que plage de vitesses de rotation prédéterminée comportant une ou plusieurs fréquences de résonance auxquelles une résonance se produit en fonction du système de la machine à laver (1).

5. Procédé selon la revendication 4, dans lequel la seconde vitesse de rotation est plus élevée que la fréquence de résonance de la période transitoire.

6. Procédé selon l'une quelconque des revendications 2 à 5, dans lequel, à la première étape de nettoyage (S253), la quantité d'excentrique du tambour est captée.

7. Procédé selon la revendication 6, dans lequel il est mis fin à la première étape de nettoyage (S253) lorsque la quantité d'excentrique du tambour (40) captée à la première étape de nettoyage (S253) dépasse la quantité d'excentrique de référence.

8. Procédé selon l'une quelconque des revendications 1 à 7, dans lequel, à l'étape d'alimentation en eau (S210), la quantité d'excentrique du tambour (40) est captée, le tambour (40) est accéléré d'après la quantité d'excentrique captée, et il est déterminé si l'étape de nettoyage doit être réalisée.

9. Procédé selon la revendication 8, et il est déterminé si la première étape de nettoyage (S253) ou la seconde étape de nettoyage (S251) doit être réalisée.

10. Procédé selon l'une quelconque des revendications 1 à 9, dans lequel la vitesse de rotation d'alimentation en eau est une vitesse de rotation minimale à laquelle le linge se déplaçant le long du tambour (40) est dans l'incapacité de se détacher de la surface circonférentielle intérieure du tambour (40) en raison d'une force centrifuge.

11. Procédé selon l'une quelconque des revendications 1 à 10, dans lequel, à l'étape d'alimentation en eau (S210), l'eau de lavage est fournie dans la cuve (30) jusqu'à un niveau d'eau prédéterminé, et une pompe de vidange (71) est désactivée.

12. Procédé selon la revendication 11, dans lequel, à l'étape de nettoyage (S251, S253), la pompe de vidange (71) est désactivée afin d'empêcher l'évacuation de l'eau de lavage fournie à l'étape d'alimentation en eau.

13. Procédé selon la revendication 11 ou 12, dans lequel le niveau d'eau prédéterminé est supérieur ou égal à une hauteur d'une extrémité inférieure de la cuve à une extrémité inférieure du tambour (40).
